# EUROPÄISCHE PATENTSCHRIFT

(11) **EP 1 857 681 B1**
(45) Veröffentlichungstag und Bekanntmachung des Hinweises auf die Patenterteilung: **08.07.2015**
(21) Anmeldenummer: 07008040.3
(22) Anmeldetag: 20.04.2007
(51) Int. Cl.: F04C 29/00, F04C 18/12, F04C 18/344

(54) **Drehschiebervakuumpumpe mit Spaltrohrmotor**
Vane vacuum pump with canned motor
Pompe à vide à palettes avec moteur à gaine

(30) Priorität: 16.05.2006 DE 102006022772
(43) Veröffentlichungstag der Anmeldung: 21.11.2007
(73) Patentinhaber: PFEIFFER VACUUM GMBH, 35614 Asslar (DE)
(72) Erfinder: Wagner, Jürgen, 57629 Müschenbach (DE)
(74) Vertreter: Knefel, Cordula

(56) Entgegenhaltungen:
- DE-A1- 3 540 959
- DE-A1- 3 931 988
- DE-A1- 4 220 015
- DE-A1- 10 022 062

## Beschreibung

Die Erfindung betrifft eine Drehschiebervakuumpumpe mit einer Antriebsanordnung mit einem Motorstator, mit einem Motorläufer, mit einem zwischen den Motorstator und Motorläufer angeordneten Trennelement, welches eine Innenseite und eine Außenseite aufweist.

Vakuumpumpen besitzen rotierende Wellen, deren Lagerung oftmals durch Betriebsmittel wie z.B. Öl geschmiert werden. In manchen Vakuumpumpen wird dieses Betriebsmittel gleichzeitig zum Abdichten des Arbeitsraumes verwendet, beispielsweise in sogenannten Drehschieberpumpen. Vakuumpumpen weisen eine oder mehrere Wellen auf, von denen mindestens durch einen Elektromotor in Drehung versetzt und gehalten wird. Oftmals handelt es sich bei den Motoren um Asynchronmotoren. Generell wird vermieden, den Motor im mit Betriebsmittel befüllten Raum anzuordnen. Dies macht eine bauliche, hermetische Trennung notwendig, die im Stand der Technik meist durch einen sogenannten Spalttopf realisiert wird. Dieser Spalttopf ist entweder direkt im Motorspalt oder in einer Magnetkupplung angeordnet und besteht aus einem Material, in welchem durch die wechselnden magnetischen Felder keine oder sehr geringe Wirbelströme erzeugt werden. Ein Beispiel für die Anwendung eines Spalttopfes in einer Vakuumpumpe zeigt die DE-OS 10 2004 024 554. Der Spalttopf bedingt eine Vergößerung des Motorspaltes, wodurch der Wirkungsgrad des Motors abnimmt und die Leistungsaufnahme steigt.

Der negative Einfluss des Spalttopfs auf die Weite des Motorspalts beruht auf einigen sich summierenden Effekten. Zum einen sind die Wände herstellungsbedingt nur in geringem Maße parallel, d.h. die Wandstärke nimmt von Topfboden zu Befestigungsflansch zu. Zum anderen erzeugt die einseitige Befestigung über einen Befestigungsflansch eine Verkippung des Topfes. Die Bauhöhe des Topfes wirkt als langer Hebel, am Topfboden wirkt sich die Verkippung am stärksten aus. Der Motorspalt muss entsprechend groß sein. Im Übrigen birgt die Befestigung über den Flansch bei vielen der nichtmagnetischen Materialien die Gefahr der Zerstörung durch Verspannungen, die durch ungleichmäßiges Einleiten von Kräften über die Flanschverbindung entstehen.

Die DE 100 22 062 A1 zeigt eine Turbomolekularvakuumpumpe mit einem Magnetlager und Motor. Zwischen Rotor- und Statorkomponenten von Magnetlager und Motor ist ein Spaltrohr vorgesehen.

Die DE 35 40 959 A1 betrifft die Ölfordereinrichtung einer Wälzkolbenvakuumpumpe. Zwischen Rotor und Stator des Motors ist ein Spaltrohr vorgesehen, die Welle des Motor ist hohl und ermöglicht den Öltransport.

Die DE 42 20 015 A1 stellt eine Gasreibungsvakuumpumpe nach turbomolekularer Bauart vor. Zwischen Rotor und Stator des Motors ist ein Spaltrohr angeordnet.

Die DE 39 31 988 A1 betrifft einen Spaltrohrmotor und schlägt vor, die Lagerträger fest mit dem Spaltrohr zu verbinden, um einen kartuschenartigen Einsatz zu formen.

Die Aufgabe der Erfindung ist es, eine Drehschiebervakuumpumpe mit einer hermetisch dichten Trennung zwischen Rotor- und Statorbauteilen eines Elektromotors vorzustellen, die einen möglichst kleinen Motorspalt aufweist.

Gelöst wird diese Aufgabe durch eine Drehschiebervakuumpumpe mit den Merkmalen nach Anspruch 1.

Durch Gestaltung des Trennelements als Trennhülse, die in wenigstens zwei koaxialen, zylindrischen und axial beabstandeten Führungsflächen gelagert ist, wobei die Führungsflächen die Außenseite der Trennhülse berühren, ist es möglich, das Trennelement hochgenau zu formen. Hülsen können hochgenau in Schleif-, Dreh- oder Ziehverfahren hergestellt werden und auf eine über ihre Länge sehr gleichmäßige Wandstärke gebracht werden. Lagert man solch eine Hülse in koaxialen Flächen, ist eine sehr präzise Ausrichtung der Trennhülse gewährleistet, so dass in der Summe ein kleiner Motorspalt entsteht. Um Probleme durch thermische Effekte zu vermeiden, sind die Führungsflächen derart angeordnet, dass sie die Außenfläche der Trennhülse berühren. Dies ist bei schwachmagnetischem Trennhülsenmaterial von Vorteil, da sich dieses aufgrund von Wirbelströmen erwärmt und in Folge stärker ausdehnt als die Bauteile mit den Führungsflächen. Daraus könnten Undichtigkeiten entstehen. Umgekehrt ist auch bei nichtmagnetischem Material diese Anordnung von Vorteil, da sich eine solche Trennhülse praktisch nicht erwärmt und damit nicht ausdehnt. Wenn sich die Bauteile mit den Führungsflächen leicht ausdehnen, entsteht eine Spannung in der Trennhülse, die zu deren Zerstörung führen kann.

Die Ansprüche 2 bis 7 sind vorteilhafte Weiterbildungen der Drehschiebervakuumpumpe.

Die erste Weiterbildung schafft eine Antriebsanordnung mit sehr geringem Bauraum, indem die Bauteile, von denen wenigstens zwei je eine der Führungsflächen tragen, den Motorstator des Antriebs umgeben. Auf diese Weise liegt an jedem axialen Ende der Spulen eine der Führungsflächen. Daher kann die Trennhülse an ihrem Ende gehaltert und hochgenau positioniert werden.

Die zweite Weiterbildung bezieht sich auf die Materialwahl für die Trennhülse. Glas gibt es mit sehr geringem Wärmeausdehungskoeffizienten, es ist nichtmagnetisch, so dass keine Wirbelströme entstehen, und es lässt sich in sehr exakten Abmessungen herstellen. Glas ist zudem in Ausführungen erhältlich, die eine hohe chemische Beständigkeit aufweisen.

Die dritte Weiterbildung stellt eine günstige Anordnung von Dichtmitteln dar. Diese sind dabei so angeordnet, dass sie die Außenseite der Trennhülse berühren. Auf diese Weise ist auch bei Ausdehnung der Trennhülse gewährleistet, dass die Anordnung dicht bleibt. Vorteilhaft werden Elastomerdichtungen als Dichtmittel verwendet.

Die nächste Weiterbildung gewährleistet, dass die Trennhülse nicht verspannt eingebaut wird, sondern in axialer Richtung schwimmend gelagert ist. Dieses Spiel wird geschaffen, in dem die den axialen Anschlag definierenden Flächen weiter voneinander beabstandet sind als die Trennhülse lang ist.

Eine weitere Ausbildung bezieht sich auf die Gestaltung von Motorstator und - läufer. Durch Anordnung von Permanentmagneten auf dem Motorläufer und elektrischen Spulen entsteht ein Motor, bei dem die Vorzüge eines engen Motorspaltes gesteigert werden und ein hoher Wirkungsgradvorteil erreicht wird.

Die Weiterbildung nach Anspruch 7 stellt eine günstige Bauform dar, bei der Motorläufer und eine Welle des Pumpsystems einstückig ausgebildet werden. Auf diese Weise werden Lager im Bereich des Motors eingespart, was eine Kostenreduktion bedeutet und Fehlerquellen reduziert.

Mit Hilfe der Abbildungen soll die Erfindung an Ausführungsbeispielen näher erläutert und ihre Vorteile vertieft werden. Die Abbildungen zeigen:

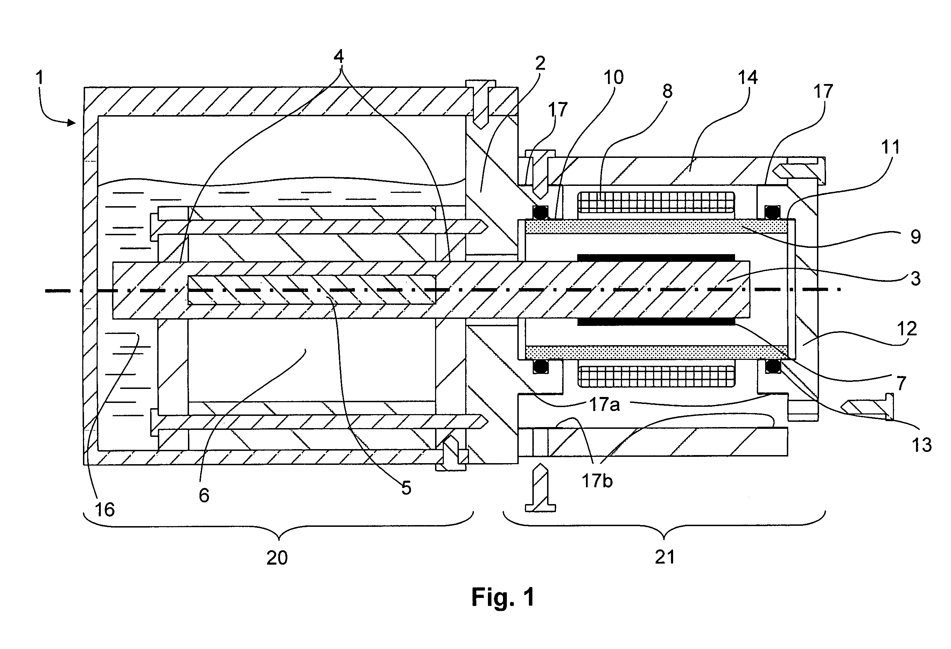

Fig. 1: Schnitt durch eine Drehschiebervakuumpumpe.

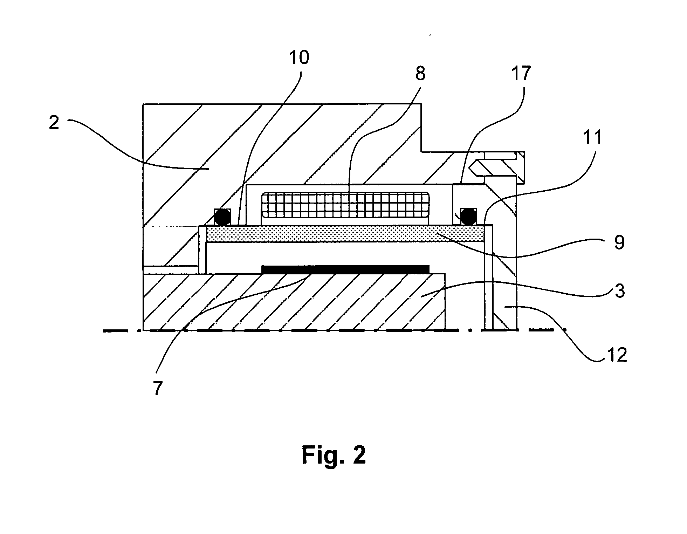

Fig. 2: Teilschnitt durch die Antriebsanordnung in einer Weiterbildung.

Die erste Abbildung zeigt den Schnitt durch eine mit Öl 16 gedichtete und geschmierte Drehschiebervakuumpumpe 1, im folgenden: Vakuumpumpe. Zentrales Bauteil der Vakuumpumpe ist der Träger 2. An diesem Träger sind die Bauteile des Pumpsystems einerseits und der Antriebsanordnung andererseits befestigt. Eine Welle 3 ist in Gleitlager 4 drehbar gelagert und durchsetzt exzentrisch einen zylindrischen Hohlraum. Dieser Hohlraum entsteht durch eine Körper mit einer zylindrischen Bohrung und Abdeckplatten an jedem axialen Ende. Die Welle nimmt einen oder mehrere Schieber 5 auf, die die Wandungen des Hohlraums berühren und hierdurch einen Schöpfraum 6 bilden. Durch die Rotation der Welle und der daraus resultierenden Bewegung der Schieber entsteht die an sich bekannte Pumpwirkung. Auf die Darstellung der notwendigen, im Stand der Technik hinlänglich bekannten, Ventile wurde hier der Einfachheit halber verzichtet. Die Welle trägt Permanentmagnete 7, die mit elektrischen Spulen 8 zusammenwirken und so die Welle in Drehung versetzen. Zwischen den Permanentmagneten und den elektrischen Spulen befindet sich der überproportinal groß dargestellte Motorspalt. In ihm ist ein Trennelement 9 angeordnet, das als Glasrohr ausgeführt ist. Dieses Glasrohr ist in einer am Träger befindlichen zylindrischen Führungsfläche 10 und einer an einer Abdeckung 12 befindlichen, ebenfalls zylindrischen Führungsfläche 11 gelagert. Die Führungsflächen 10 und 11 sind koaxial und axial voneinander beabstandet. Wenn das Glasrohr einen durchgängig konstanten Außendurchmesser besitzt, weisen die Führungsflächen den gleichen Radius auf. Um Spannungen zu vermeiden, die durch ungleichmäßige Wärmeausdehnung von Glasrohr und Träger sowie Abdeckung entstehen könnten, berühren die Führungsflächen die Außenseite des Glasrohrs. Die Abdeckung 12 und der Träger 2 sind über ein Distanzstück 14 miteinander verbunden. Zusammen mit der Trennhülse umschließen diese Bauteile einen Raum, in dem die elektrischen Spulen angeordnet sind. Die Koaxialität der Führungsflächen wird über Verbindungsflächen 17 gewährleistet. Diese Verbindungsflächen sind an der Innenseite des Distanzstückes 14 und an Träger und Abdeckung vorgesehen. Im rechten, unteren Teil der Abbildung ist die Anordnung in explodierter Ansicht dargestellt; die Verbindungsflächen an Träger und Abdeckung sind mit 17a bezeichnet, die Verbindungsflächen auf dem Distanzstück mit 17b. Die Verbindungsflächen am Distanzstück können in einem gemeinsamen Arbeitsgang, beispielsweise Drehen, hergestellt werden. Ebenso können Führungsfläche 10 und die Verbindungsfläche am Träger und Führungsfläche 11 und Verbindungsfläche 17 jeweils in einem Arbeitsgang hergestellt werden. Die Orientierung der Abdeckung und des Trägers und damit der Führungsflächen zueinander ist hierdurch hochpräzise. Daraus resultiert ein kleiner Motorspalt. Durch den Träger 2 und der Abdeckung 12 sind in beide axiale Richtungen Anschläge vorgegeben. Deren Abstand ist größer als die axiale Länge des Glasrohrs, so dass dieses ein gewisses Spiel hat. Günstig ist es, wenn die Führungsflächen 14 nicht so eng toleriert sind, dass eine Vorspannung entsteht. In diesem Fall bleibt das Glasrohr in gewissem Maße beweglich. Das Glasrohr ist dann insgesamt durch die axialen und radialen Maße in den Elastomerringen 13 schwimmend gelagert, wobei es durch die Führungsflächen 10, 11 geführt ist.

Die zweite Abbildung zeigt ein verbessertes Ausführungsbeispiel, wobei nur ein Teil der Antriebsanordnung im Schnitt dargestellt ist. In diesem Beispiel ist das Trägerbauteil 2 so gestaltet, dass es zugleich die Funktion des Distanzstückes übernimmt. Träger 2, Trennelement 9 und Abdeckung 12 legen den Raum fest, in dem die elektrischen Spulen 8 angeordnet sind. Diese Anordnung ist gegenüber dem ersten Ausführungsbeispiel kompakter. Ein weiterer Vorteil ist, dass die Zahl der zueinander koaxialen Flächen minimiert ist. Es ist nur eine Verbindungsstelle zwischen Abdeckung und Trägerbauteil notwendig, so dass nur hier Verbindungsflächen 17 vorliegen. In einem Arbeitsschritt kann die Führungsfläche 10 mit der Verbindungsfläche am Trägerbauteil hergestellt werden. In einem zweiten Arbeitsschritt wird die Führungsfläche 11 mit der Verbindungsfläche an der Abdeckung hergestellt. Daher sind die Verbindungsflächen und die jeweiligen Führungsflächen hochgenau koaxial, daher auch die Führungsflächen zueinander. Hierdurch ist eine höhere Präzision möglich, so dass der Spalt zwischen den auf der Welle 3 befindlichen Permanentmagneten 7 und den elektrischen Spulen 8 optimal klein gehalten werden kann. Die Leistungsdaten des Motors werden entsprechend verbessert, bzw. die notwendige Motorleistung wird verringert, da die Verluste durch den Motorspalt sinken.

## Patentansprüche

1. Drehschiebervakuumpumpe (1) mit einer Welle (3) und mit einer Antriebsanordnung mit einem Motorstator, mit einem Motorläufer, mit einem zwischen den Motorstator und Motorläufer angeordneten Trennelement (9), welches eine Innenseite und eine Außenseite aufweist, **dadurch gekennzeichnet, dass** das Trennelement (9) eine in wenigstens zwei zylindrischen, koaxialen und axial beabstandeten Führungsflächen (10, 11) gelagerte und zentrierte Trennhülse umfasst, wobei die Führungsflächen die Außenseite berühren, und dass die Welle in einem Gleitlager (4) gelagert ist.

2. Drehschiebervakuumpumpe nach Anspruch 1, **dadurch gekennzeichnet, dass** wenigstens zwei Bauteile (2, 14, 12) zusammen mit dem Trennelement (9) einen Raum definieren, in dem der Motorstator angeordnet ist, wobei die Bauteile über an den Bauteilen vorgesehenen und zu den Führungsflächen koaxialen Flächen (17, 17a, 17b) zueinander orientiert sind und wenigstens zwei der Bauteile je eine Führungsfläche (10, 11) aufweisen.

3. Drehschiebervakuumpumpe nach Anspruch 1 oder 2, **dadurch gekennzeichnet, dass** die Trennhülse (9) ein Glasrohr umfasst.

4. Drehschiebervakuumpumpe nach einem der vorhergehenden Ansprüche, **dadurch gekennzeichnet, dass** die Abdichtung des Raumes innerhalb der Trennhülse von dem Raum außerhalb durch Elastomerringe (13) erfolgt, die auf der Außenseite des Glasrohrs angeordnet sind.

5. Drehschiebervakuumpumpe nach einem der vorhergehenden Ansprüche, **dadurch gekennzeichnet, dass** die durch die mit den Führungsflächen (10, 11) versehenen Bauteile festgelegten Anschläge der Trennhülse in axialer Richtung weiter voneinander beabstandet sind als das Glasrohr lang ist.

6. Drehschiebervakuumpumpe nach einem der vorhergehenden Ansprüche, **dadurch gekennzeichnet, dass** der Motorstator elektrische Spulen (8) und der Motorläufer Permanentmagnete (7) umfasst.

7. Drehschiebervakuumpumpe nach einem der vorhergehenden Ansprüche, **dadurch gekennzeichnet, dass** der Motorläufer und die Welle (3) einstückig ausgebildet sind, wobei die Welle eine Pumpwirkung erzeugende Bauteile (5) trägt.

## Claims

1. Rotary vane vacuum pump (1) having a shaft (3) and a drive arrangement, a motor stator, a motor rotor, and arranged between the motor stator and the motor rotor, a separation member (9) which has an inner side and an outer side, **characterised in that** the separation member (9) comprises a separation sleeve mounted and centred in at least two cylindrical, coaxial and axially spaced guide surfaces (10, 11), wherein the guide surfaces touch the outer side and **in that** the shaft is mounted in a slide bearing (4).

2. Rotary vane vacuum pump according to claim 1, **characterised in that** at least two components (2, 14, 12) define, together with the separation element (9), a chamber in which the motor stator is arranged, wherein the components are oriented relative to one another by means of surfaces (17, 17a, 17b) which are provided on the components and are coaxial with the guide surfaces and at least two of the components each have a guide surface (10, 11).

3. Rotary vane vacuum pump according to claim 1 or 2, **characterised in that** the separation sleeve (9) comprises a glass tube.

4. Rotary vane vacuum pump according to one of the preceding claims, **characterised in that** the sealing of the space within the separation sleeve from the space outside thereof is achieved by means of elastomer rings (13) which are arranged on the outside of the glass tube.

5. Rotary vane vacuum pump according to one of the preceding claims, **characterised in that** the end stops of the separation sleeve defined by means of the components provided with the guide surfaces (10, 11) are spaced further apart from one another in the axial direction than the glass tube is long.

6. Rotary vane vacuum pump according to one of the preceding claims, **characterised in that** the motor stator comprises electric coils (8) and the motor rotor comprises permanent magnets (7).

7. Rotary vane vacuum pump according to one of the preceding claims, **characterised in that** the motor rotor and the shaft (3) are formed integrally, wherein the shaft carries components (5) generating a pumping effect.

## Revendications

1. Pompe à vide à palettes (1) comprenant un arbre (3) et un agencement d'entraînement avec un stator de moteur, un rotor de moteur, un élément de séparation (9) disposé entre le stator de moteur et le rotor de moteur, qui présente un côté intérieur et un côté extérieur, **caractérisée en ce que** l'élément de séparation (9) comprend une douille de séparation centrée et supportée dans au moins deux surfaces de guidage cylindriques, coaxiales et espacées axialement (10, 11), les surfaces de guidage étant en contact avec le côté extérieur, et **en ce que** l'arbre est supporté dans un palier lisse (4).

2. Pompe à vide à palettes selon la revendication 1, **caractérisée en ce qu'**au moins deux composants (2, 14, 12) définissent conjointement avec l'élément de séparation (9) un espace dans lequel est disposé le stator de moteur, les composants étant orientés les uns par rapport aux autres par le biais de surfaces (17, 17a, 17b) prévues au niveau des composants et coaxiales aux surfaces de guidage et au moins deux des composants présentant chacun une surface de guidage (10, 11).

3. Pompe à vide à palettes selon la revendication 1 ou 2, **caractérisée en ce que** la douille de séparation (9) comprend un tube de verre.

4. Pompe à vide à palettes selon l'une quelconque des revendications précédentes, **caractérisée en ce que** l'étanchéité de l'espace à l'intérieur de la douille de séparation par rapport à l'espace à l'extérieur s'effectue par des bagues élastomères (13) qui sont disposées sur le côté extérieur du tube de verre.

5. Pompe à vide à palettes selon l'une quelconque des revendications précédentes, **caractérisée en ce que** les butées de la douille de séparation fixées par les composants pourvus des surfaces de guidage (10, 11) sont espacées l'une de l'autre dans la direction axiale d'une longueur supérieure à la longueur du tube de verre.

6. Pompe à vide à palettes selon l'une quelconque des revendications précédentes, **caractérisée en ce que** le stator de moteur comprend des bobines électriques (8) et le rotor de moteur comprend des aimants permanents (7).

7. Pompe à vide à palettes selon l'une quelconque des revendications précédentes, **caractérisée en ce que** le rotor de moteur et l'arbre (3) sont réalisés d'une seule pièce, l'arbre portant des composants (5) produisant un effet de pompe.
